# EUROPÄISCHE PATENTANMELDUNG

(11) **EP 2 505 335 A2**
(43) Veröffentlichungstag der Anmeldung: **03.10.2012**
(21) Anmeldenummer: 12002378.3
(22) Anmeldetag: 29.03.2012
(51) Int. Cl.: B29C 47/08, B29C 47/36, B29C 47/50, F04C 2/107, F04C 15/00, B29C 47/92, B29C 47/80

(54) **Extrusionsvorrichtung zur Herstellung eines strangförmigen Profils oder Schlauches aus Kunststoff- oder Kautschukmasse**

(30) Priorität: 31.03.2011 DE 102011015704
(71) Anmelder: Reineke, Frank, 30952 Ronnenberg (DE)
(72) Erfinder: Reineke, Frank, 30952 Ronnenberg (DE)
(74) Vertreter: Seewald, Jürgen

(57) **Zusammenfassung**

Die vorliegende Erfindung betrifft eine Extrusionsvorrichtung zur Herstellung eines strangförmigen Profils oder Schlauches, bestehend aus wenigstens einem Einschneckenextruder (1) mit Förderschnecke (3) und Antrieb (12), an dessen austragsseitigem Ende wenigstens eine Exzenterschneckenpumpe (8) mit Rotor (9) und Stator (10) angeschlossen ist und mit Kautschuk- oder Kunststoffmasse (7) beliefert wird, und wenigstens einem Spritzkopf (4), welcher Mittel zum Urformen (5) wenigstens eines Profilstrangs (6) im Extrusionsverfahren aufweist, wobei ein aus mindestens zwei Teilen bestehendes Verbindungsmittel (11) das Drehmoment einer zentrisch drehenden Antriebsbewegung (19) auf den Rotor (9) überträgt und diese dabei gleichzeitig von der exzentrischer Pumpbewegung des Rotors (9) entkoppelt.

## Beschreibung

Die vorliegende Erfindung betrifft eine Extrusionsvorrichtung zur Herstellung eines strangförmigen Profils oder Schlauches aus Kunststoff- oder Kautschukmasse gemäß dem Oberbegriff des Anspruchs 1. Eine extrudierte Reifenkomponente, also ein Lauf- bzw. Seitenstreifen, stellt dabei ebenfalls ein Profil bzw. einen Profilstrang im Sinne der Erfindung dar.

Bei der Extrusion von Schläuchen und Profilen aus Kunststoff- oder Kautschukmasse mittels eines Einschneckenextruder, wird die erwärmte und plastifizierte Masse durch den Widerstand einer formgebenden Austrittsdüse ins Freie gedrückt. Gegen hohen Extrusionswiderstand, ab etwa 200 bar, kann der Förderwirkungsgrad eines Einschneckenextruders nennenswert verbessert werden, indem eine Verdrängerpumpe zwischen Extruder und Spritzkopf installiert wird. Anstatt vom Extruder wird der erforderliche Extrusionsdruck zum Überwinden des Spritzkopf- und Spritzwerkzeugwiderstands dann von der Verdrängerpumpe aufgebaut. Insbesondere dann, wenn der erforderliche Extrusionsdruck sehr hoch ist, ab etwa 350 bis hin zu 800 bar, wird der Einschneckenextruder durch die Verdrängerpumpe sogar ganz erheblich entlastet, da von diesem dann nur noch der Fülldruck für die Verdrängerpumpe erzeugt werden muss, welcher um den Faktor 10 bis 15 kleiner als der erforderliche Extrusionsdruck sein kann. Aufgrund der volumetrischen Förderung bei Verdrängerpumpen erfolgt der Druckaufbau bei diesen zudem erheblich material- und temperaturschonender als im Schneckenextruder, was insbesondere bei der Verarbeitung von Kautschukmasse von entscheidender Bedeutung sein kann.

Eine gattungsgemäße Extrusionsvorrichtung ist aus der US 4 519 712 A bekannt. Da der Rotor der Exzenterschneckenpumpe eine exzentrische Pumpbewegung ausführt, die Extruderschnecke jedoch (wie ein üblicher Antrieb) zentrisch dreht, ist dazwischen ein Verbindungsmittel zur Entkopplung der radialen Bewegungskomponente erforderlich. Als Verbindungsmittel zwischen der Extruderschnecke und dem Rotor der Exzenterschneckenpumpe kommt eine Art Kreuzgelenk zum Einsatz, welches zur Übertragung eines Drehmoments zwischen den nicht fluchtenden Achsen von Rotor und Förderschnecke eine Schiefstellung einnimmt. Der Winkel dieser Schiefstellung darf zur Erzielung eines gleichförmigen Umlaufs nicht groß sein. Daraus ergibt sich bei einer gegebenen Exzentrizität des Pumpenrotors ein einzuhaltender Mindestabstand zwischen den beiden Gelenken. Zudem treten aufgrund der Schiefstellung in den Gelenken beim Umlauf große Reibungskräfte auf, die einen entsprechenden Verschleiß verursachen. Da bei der Verarbeitung von Kunststoff oder Kautschukmasse, Extrusionsdrücke von bis zu 800 bar erforderlich sein können, ist ein sehr hohes Drehmoment zum Antrieb des Pumpenrotors erforderlich. Um das hohe Drehmoment zuverlässig zu übertragen, müssen die Gelenke sehr stark ausgeführt und gleichzeitig gegen das zu fördernde Medium abgedichtet sein. Derartig dimensionierte und abgedichtete Gelenke sind aufgrund ihrer Größe und Bauform jedoch ungeeignet, um direkt im Verfahrensraum der Kunststoff- oder Kautschukförderung installiert zu werden. Im Produktionsalltag hat sich der Einsatz von Exzenterschneckenpumpen in Extrusionsanlagen für die Kunststoff- oder Kautschukverarbeitung aus den oben genannten Gründen bis heute nicht durchgesetzt.

Eine weitere gattungsgemäße Extrusionsvorrichtung ist in der DE 2 222 975 A beschrieben. Hier erfolgt die Verbindung von Rotor und Förderschnecke durch einen exzentrischen Drehzapfen der Förderschnecke, der aber weder näher beschrieben noch dargestellt ist.

In der Praxis wird dem Einschneckenextruder in der Kunststoff- oder Kautschukverarbeitung zur materialschonenden Förderung gegen hohen Extrusionswiderstand wegen der oben genannten Mängel deshalb eine Zahnradpumpe als Verdrängerpumpe nachgeschaltet. Aufgrund ihrer volumetrischen Förderung ermöglicht die Zahnradpumpe einen schonenden Druckaufbau bei gutem Pumpenwirkungsgrad. Bei entsprechender Auslegung fördern Zahnradpumpen bei konstanter Drehzahl zudem einen nahezu pulsationsfreien Volumenstrom wodurch die Dimensionsstabilität der extrudierten Profile und Schläuche stark verbessert werden kann.

Zahnradpumpen wie sie nach dem Stand der Technik In der Extrusion von Kunststoff- oder Kautschukmasse eingesetzt werden, weisen neben ihren unbestreitbaren Vorteilen, jedoch bekanntermaßen auch erhebliche Nachteile auf:
Die Verzahnung der Zahnradpumpe ist verschleiß- und bruchempfindlich, da sie bereits im Normalbetrieb, für Druckaufbau und Förderung, höchsten Belastungen ausgesetzt ist. Wenn das zu fördernde Medium darüber hinaus grobe Verunreinigungen in Form von harten Fremdkörpern enthält, kann es unvermittelt zum Bruch der Verzahnung kommen, wenn sich ein Fremdkörper in der Verzahnung verkeilt.

Mit zunehmendem Verschleiß der Verzahnung, welcher sich von außen nur schwerlich erkennen lässt, erhöht sich das Risiko eines spontanen Zahnbruchs, wodurch es zum plötzlichen und kaum vorhersagbaren Ausfall der Zahnradpumpe und einem sofortigen Produktionsstillstand kommen kann.

Um den Verschleiß der hoch belasteten Zahnflanken zu reduzieren, insbesondere bei der Verarbeitung von Medien mit hohem Anteil abrasiver Füllstoffe, werden beide Zahnwellen der Zahnradpumpe mit einem eigenen Antrieb ausgestattet, wie diese aus der EP 2 275 684 A1 bekannt ist. Dies vergrößert den Platzbedarf der Zahnradpumpe jedoch erheblich und auch die Anschaffungskosten des Aggregats werden dadurch erhöht.

Bei Zahnradpumpen ist die Selbstreinigung aufgrund der komplexen Geometrie der Verzahnung unbefriedigend, so dass eine vollständige Reinigung der Verzahnung immer ein aufwändiges, komplettes Zerlegen der Zahnradpumpe erforderlich macht.

In der wohl am häufigsten verwendeten Ausführung besteht eine Zahnradpumpe im Wesentlichen aus zwei kämmenden Zahnwellen welche in einem gemeinsamen Gehäuse gelagert sind. Die Zahnwellen sind dabei quer zur Förderrichtung der Zahnradpumpe und ebenfalls quer zur Rotationsachse der Extruderschnecke angeordnet. Da die Rotationsachsen der beiden Zahnwellen nicht koaxial zur Rotationsachse der Förderschnecke sind, kann die Zahnradpumpe nicht sinnvoll an den Antrieb des Einschneckenextruders gekoppelt und von diesem mit angetrieben werden. Zum Antrieb der Zahnradpumpe ist somit zumindest ein zusätzlicher Antrieb erforderlich.

Aufgrund ihrer Gestalt, und da ein zusätzlicher eigener Antrieb erforderlich ist, beansprucht eine Zahnradpumpe einen erheblichen Bauraum in der Nähe des Spritzkopfes. Bei der Herstellung von mehrkomponentigen Reifenprofilen ist der Einsatz von Zahnradpumpen deshalb nahezu ausgeschlossen. Die beengten Platzverhältnisse an den in der Reifenherstellung üblichen Mehrfach-Spritzköpfen, mit bis zu fünf, auf engstem Raum am Spritzkopf angeschlossenen Extrudern, lassen den Einbau einer Zahnradpumpe einfach nicht zu.

Die Schmierung der Zahnwellenlagerung erfolgt bei der Zahnradpumpe üblicherweise mit dem zu fördernden Medium. Das Ab- bzw. Rückführen des Lagerleckstroms gestaltet sich in der Praxis entweder aufwendig oder störend.

Der Erfindung liegt die Aufgabe zugrunde, eine gattungsgemäße Extrusionseinrichtung zur Verfügung zu stellen, die einen praxistauglichen Einsatz einer Exzenterschneckenpumpe im Extrusionsprozess ermöglicht.

Diese Aufgabe wird erfindungsgemäß mit einer Extrusionsvorrichtung gelöst, die die Merkmale des Anspruchs 1 aufweist.

Der Gegenstand der Erfindung offenbart ein neues Verbindungsmittel, um das erforderliche Drehmoment vom zentrisch drehenden Antrieb auf den Rotor der Exzenterschneckenpumpe zu übertragen, dabei aber gleichzeitig dessen exzentrische Pumpbewegung vom zentrisch drehenden Antrieb zu entkoppeln. Der Gegenstand der Erfindung vermeidet dabei die Nachteile des Stands der Technik, indem das Verbindungsmittel ohne Drehgelenke konzipiert ist und somit einen erheblichen Nachteil von Kreuzgelenken bzw. Kardanwellen vermeidet. Die Exzenterschneckenpumpe kann dadurch im Extrusionsprozess Anwendung finden und als volumetrisch fördernde Pumpe dem gebräuchlichen Einschneckenextruder nachgeschaltet werden und diesen beim Druckaufbau erheblich entlasten.

Exzenterschneckenpumpen, die im Wesentlichen aus der exzentrisch rotierenden Exzenterschnecke (Rotor) und einem feststehenden Stator bestehen, werden nach dem Stand der Technik zum Fördern verschiedenster Medien eingesetzt. Insbesondere haben sich Exzenterschneckenpumpen als einfach aufgebaute und zuverlässige Pumpen-Aggregate zur schonenden Förderung von einfachen flüssigen oder viskosen Medien, aber auch für stark abrasive Gemische und selbst stückiges Fördergut bewährt. Neben Wasser, Rohöl oder Klebstoff können mit Exzenterschneckenpumpen auch Beton und Klärschlamm, aber auch ganze Früchte und sogar Gemüse, problemlos und vergleichsweise schonend gepumpt werden.

Der gewendelte Rotor der Exzenterschneckenpumpe führt bei seiner Drehung eine umlaufend abrollende Bewegung im Inneren des ebenfalls gewendelten Stators aus. In den hermetischen Kammern, die dabei zwischen Rotor und Stator ausgebildet werden, wird das Medium zum Ausgang der Pumpe geschoben. Der besonders schonende Transport in der Exzenterschneckenpumpe kommt dabei insbesondere dadurch zustande, dass die Gestalt der hermetischen Kammern vom Aufnehmen des Fördermediums bis zu dessen Ausstoßen vollständig erhalten bleibt. Kann das Fördermedium von der Exzenterschneckenpumpe nicht selbst angesaugt werden, so kommt eine Schnecke zum Einsatz, die das Fördermedium in die Exzenterschneckenpumpe hinein drückt.

Genau wie eine Zahnradpumpe, ermöglicht die Exzenterschneckenpumpe bei konstanter Antriebsdrehzahl eine volumetrische und nahezu pulsationsfreie Förderung mit hohem Pumpenwirkungsgrad. Wie bei der Zahnradpumpe lässt sich die nahezu pulsätionsfreie Förderung auch bei der Exzenterschneckenpumpe durch entsprechende Maßnahmen, unter anderem solcher zur Drehzahlsteuerung wie diese aus der EP 2 275 683 A1 bekannt sind, noch weiter verbessern, bis hin zu einer völlig volumenstrom- und druckkonstanten Förderung.

Im Vergleich zu den Zahnwellen einer Zahnradpumpe sind Rotor und Stator der Exzenterschneckenpumpe erheblich robuster und einfacher gestaltet, ohne Ecken und Kanten, wie sie bei der Verzahnung einer Zahnradpumpe üblich und erforderlich sind. Die Exzenterschneckenpumpe weist deshalb eine sehr viel bessere Selbstreinigung auf und kann durch einfaches Spülen mit dem neuen Fördermedium vollständig und zuverlässig gereinigt werden. Ein aufwändiges Zerlegen zur Reinigung, wie es bei der Zahnradpumpe erforderlich ist, entfällt.

Die Kinematik der Exzenterschneckenpumpe, in Kombination mit der robusten Gestaltung von Rotor und Stator, macht sie zudem unempfindlich gegen grobe Verunreinigungen und Festkörper in dem zu fördernden Medium. Ein Schaden, der dem Zahnbruch der Zahnradpumpe vergleichbarer wäre, ist bei der Exzenterschneckenpumpe ausgeschlossen.

Da der Rotor vom Stator (wie auch eine Schnecke vom Extruderzylinder) vollständig umschlossen wird, ist ein nach außen gerichteter Lagerleckstrom, wie er bei der Zahnradpumpe zur Schmierung der Wellenlager erforderlich ist, bei der Exzenterschneckenpumpe nicht vorhanden.

Die Vorliegende Erfindung sieht zusammen gefasst vor, die Verbindung einer Exzenterschneckenpumpe mit ihrem Antrieb praxisgerechter zu gestalten, um sie in der Produktion als Druckerzeuger in einem urformenden Verfahren, nämlich zur Herstellung eines strangförmigen Profils oder Schlauches aus Kunststoff- oder Kautschukmischung mittels Extrusion, einsetzen zu können. Die Erfindung sieht dabei vor, den Pumpenrotor mit dem kürzest möglichen Abstand an die Extruderschnecke oder einen zusätzlichen Antrieb zu koppeln und dabei auf jegliche Drehgelenke zu verzichten und den radialen Bewegungsausgleich durch Translation oder Abrollbewegung zu ermöglichen.

Vorteilhafte Ausgestaltungen der Erfindung ergeben sich aus den abhängigen Ansprüchen.

Die Erfindung wird nachfolgend anhand von Ausführungsbeispielen näher erläutert. In der dazugehörigen Zeichnung zeigt:
- Fig. 1: eine schematische seitliche Darstellung des erfindungsgemäßen Extrusionsaggregats in einer möglichen Ausführung mit einem Antrieb,
- Fig. 2: eine schematische Ansicht von oben auf das erfindungsgemäßen Extrusionsaggregat in einer möglichen Ausführung mit zwei Antrieben,
- Fig. 3: eine perspektivische Ansicht eines Verbindungsmittels nach Art eines Kreuzschiebers,
- Fig. 4: eine schematische Darstellung des erfindungsgemäßen Extrusionsaggregats mit einer zur Drehmomentübertragung im Eingriff befindlichen Getriebekontur nach Art einer Innen-/Außenverzahnung (im Schnitt),
- Fig. 5: die Darstellung einer beispielhaften Geometrie für Exzenterschnecke und Stator sowie für die innere und äußere Getriebekontur des Verbindungsmittels, und
- Fig. 6: einen Querschnitt durch die Exzenterschneckenpumpe mit einem in den Rotor integrierten Verbindungsmittel mit Getriebekonturen.

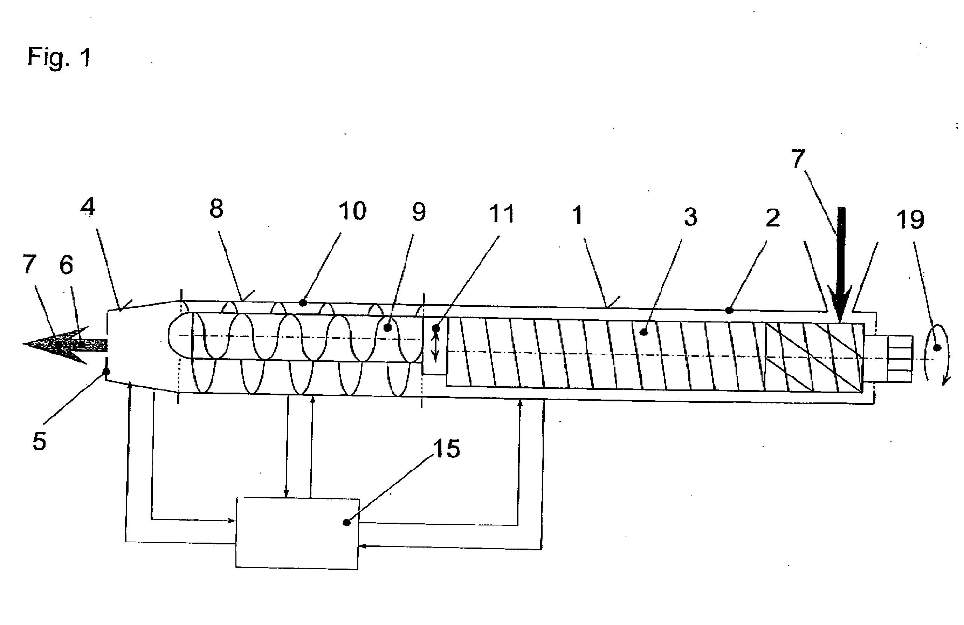

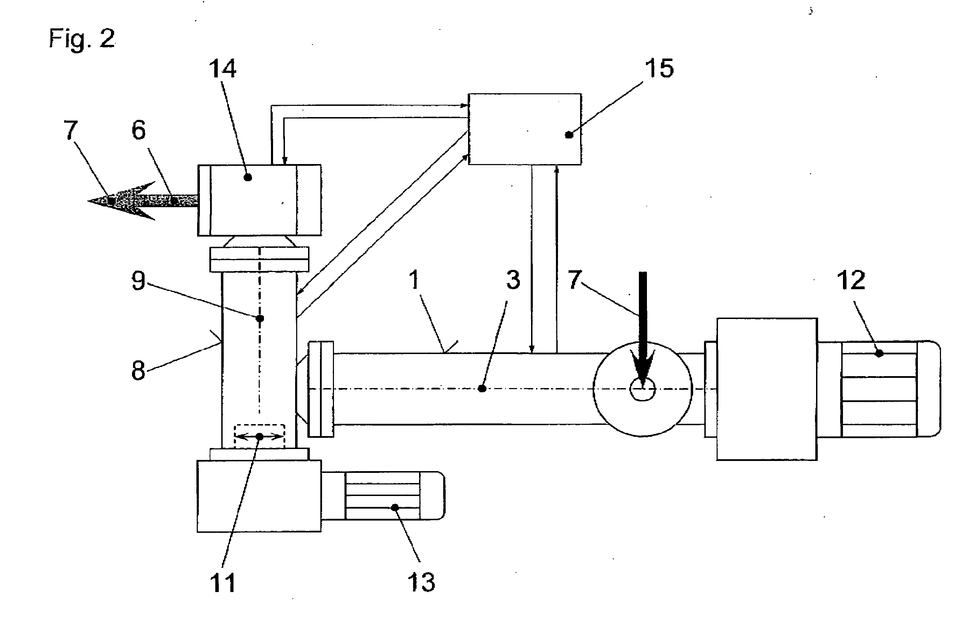

In den Fig. 1 und 2 sind zwei unterschiedliche Anordnungen eines einen Einschneckenextruder 1 und eine Exzenterschneckenpumpe 8 umfassenden Extrusionsaggregats dargestellt. In beiden Fällen zieht der Einschneckenextruder 1 mit Extruderzylinder 2, Förderschnecke 3 und Antrieb 12 (in Fig. 1 nicht dargestellt) eine Kunststoff- oder Kautschukmasse 7 ein. Die Masse wird von der rotierenden Förderschnecke 3 durch den Extruderzylinder 2 transportiert und dabei erwärmt, plastifiziert und homogenisiert. Die Förderschnecke 3 erzeugt dabei den für die nachfolgende Exzenterschneckenpumpe 8 notwendigen Fütterdruck. Durch die spezielle Geometrie von Rotor 9 und Stator 10 erzeugt die Drehung des Rotors 9 eine umlaufend abrollende, exzentrische Bewegung des Rotors 9 im Stator 10. Bei dieser Bewegung werden zwischen Rotor 9 und Stator 10 fortlaufend hermetische Kammern ausgebildet, welche die Kunststoff- oder Kautschukmasse 7 kontinuierlich nach vorn fördern und durch einen der Exzenterschneckenpumpe 8 nachfolgen Spritzkopf 4 schieben, welcher mit Mitteln zum Urformen 5 eines Profilstrangs 6 ausgestattet ist. Genau wie der Einschneckenextruder 1 und der Spritzkopf 4 ist die Exzenterschneckenpumpe 8, an eine Temperiereinrichtung 15 angeschlossen, welche mit geeigneten Mitteln Wärmeenergie zu- oder abführen kann.

In dem Ausführungsbeispiel gemäß Fig. 1 sind die längs zur Förderrichtung verlaufenden Mittelachsen der Förderschnecke 3 des Schneckenextruders 1 sowie des Rotors 9 der Exzenterschneckenpumpe 8 zueinander koaxial ausgerichtet und der Rotor 9 ist über ein nur schematisch dargestelltes Verbindungsmittel 11 mit der Förderschnecke 3 wirkverbunden und wird von dieser mit angetrieben. Das Verbindungsmittel 11 überträgt dabei einerseits auf kurzer Distanz die Drehbewegung der Förderschnecke 3 auf den Rotor 9, entkoppelt jedoch andererseits die translatorische radiale Bewegungskomponente des Rotors 9 von der Förderschnecke 3.

Fig. 2 zeigt ein Ausführungsbeispiel, bei dem Förderschnecke 3 und Rotor 9 eine nicht koaxiale Anordnung zueinander haben. Der Rotor 9 ist mit der Förderschnecke 3 in diesem Fall nicht wirkverbunden und es wird von der Förderschnecke 3 kein Drehmoment auf den Rotor 9 übertragen. Zum Betrieb der Exzenterschneckenpumpe 8 ist somit ein zusätzlicher Antrieb 13 für die Drehung des Rotors 9 erforderlich. Der Rotor 9 ist auch hier über nur schematisch dargestellte Verbindungsmittel 11 mit dem Antrieb 13 verbunden und wird von diesem angetrieben. Das Verbindungsmittel 11 überträgt dabei einerseits auf kurzer Distanz die Drehbewegung des Antriebs 13 auf den Rotor 9, entkoppelt jedoch andererseits die translatorische radiale Bewegungskomponente des Rotors 9 vom Antrieb 13. Vorteilhaft ist in diesem Zusammenhang die Möglichkeit, die Drehzahl der Förderschnecke 3 von der Drehzahl des Rotors 9 unabhängig einzustellen und dadurch den Fütterdruck zum Füllen der Exzenterschneckenpumpe 8 individuell, zum Beispiel mittels einer Druck-Drehzahl-Regelung, zu beeinflussen. Zudem erscheint aus Platzgründen die in Fig. 2 dargestellte 90°-Anordnung bei der Verwendung eines so genannten Querspritzkopfes 14, wie er zum Beispiel zur Herstellung von mehrschichtigen Schläuchen mit Gewebeeinlage oder Dichtungsprofilen mit Metallarmierung üblich ist, besonders vorteilhaft. Durch die dargestellte 90°-Anordnung, besonders in Verbindung mit (Mehrfach-) Querspritzköpfen, können solche Extrusionslinien in der Produktion dann besonders dicht und Platz sparend nebeneinander angeordnet werden.

Die Verbindungsmittel 11 können in den Ausführungsbeispielen gemäß den Fig. 1 und 2 identisch ausgeführt werden. Nachfolgend werden diese Verbindungsmittel 11 näher beschrieben.

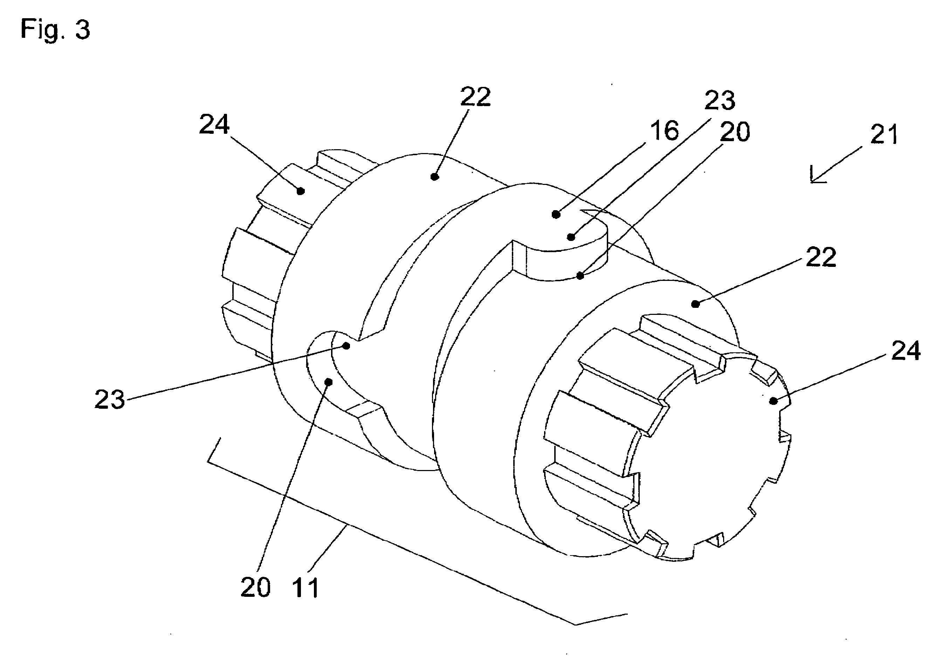

In Fig. 3 ist ein Verbindungsmittel 11 gezeigt, das nach Art eines Kreuzschiebers 21 ausgeführt ist. Der Kreuzschieber 21 weist zwei Kopplungsteile 22 auf, die in ihren im montierten Zustand einander zugewandten Stirnseiten jeweils mit einer Nut 20 versehen sind. Im montierten Zustand verlaufen die Nuten 20 orthogonal zueinander, wobei in jede Nut 20 jeweils eine Leiste 23 eines Verbindungsschiebers 16 formschlüssig so eingreift, dass der Verbindungsschieber 16 in den Kopplungsteilen 22 quer zur Förderrichtung gleiten kann. An ihren den Nuten 20 abgewandten Enden sind die Kopplungsteile 22 jeweils mit einer Keilwellenkontur 24 versehen, die der Verbindung des Kreuzschieber 21 mit der Förderschnecke 3 bzw. dem Antrieb 13 und mit dem Rotor 9 dienen.

Das Antriebsdrehmoment wird durch die formschlüssige Verbindung zwischen den Nuten 20 und den Leisten 23 übertragen, während die radiale Bewegungskomponente der exzentrischen Pumpbewegung des Rotors 9 (nicht dargestellt) durch das Gleiten des Verbindungsschiebers 16 in den Nuten 20 ausgeglichen wird. Diese Ausführung ist besonders vorteilhaft, da keine abzudichtenden Drehgelenke, wie bei einer Kardanwelle, erforderlich sind und die Bewegung aller Teile aus einer Rotation um deren Mittelachsen sowie einer dazu quer verlaufenden Translation gebildet wird. In jeder Phase der Pumpbewegung sind somit die im Wesentlichen längs zur Förderrichtung verlaufenden Mittelachsen aller Teile des Verbindungsmittels 11 immer koaxial zu der im Wesentlichen längs zur Förderrichtung verlaufenden Mittelachse des Rotors 9 (nicht dargestellt), was hingegen für eine Kardanwelle niemals zutrifft.

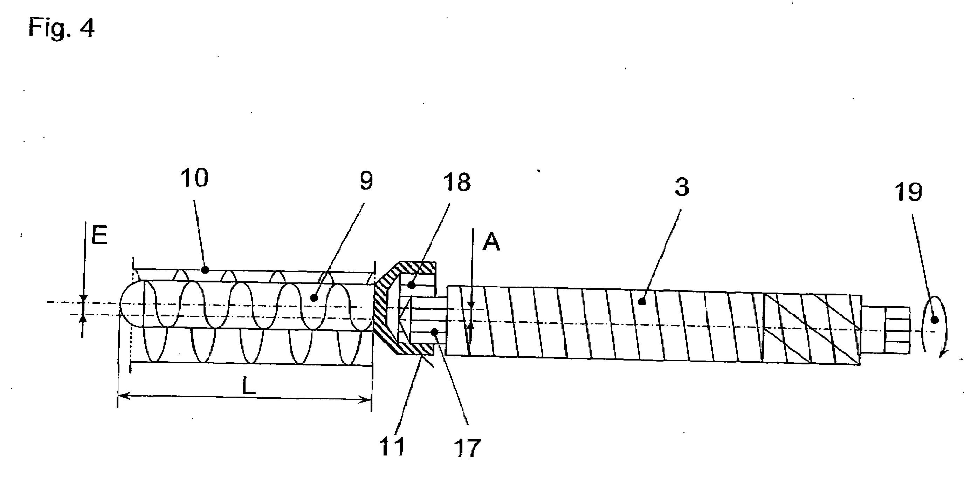

Die Fig. 4 zeigt eine schematische Darstellung von Rotor 9 und Förderschnecke 3 mit einem Verbindungsmittel 11 in einer anderen beispielhaften Ausführung mit zwei zur Drehmomentübertragung im Eingriff befindlichen Getriebekonturen 17 und 18, welche nach Art einer Innen-AußenVerzahnung ineinander Abrollen können. Die innere Getriebekontur 17 ist dabei, quasi als Ritzel, starr mit der Förderschnecke 3 verbunden und dreht genau wie diese konzentrisch im Extruderzylinder 2, während der Rotor 9 ebenfalls mit einer Verzahnung in Form der äußere Getriebekontur 18 ausgestattet ist, welche starr mit dem Rotor 9 verbunden ist und somit deren exzentrisch umlaufenden Pumpbewegung folgt. Auch bei dieser Anordnung sind somit keinerlei Kardangelenke erforderlich (wie sie zum Beispiel in der US 4 519 712 A Verwendung finden). Hierbei ist wesentlich, dass der Achsabstand A der beiden Mittelachsen der inneren und äußeren Getriebekonturen 17 und 18 genau dem Wert der Exzentrizität E der Exzenterschneckenpumpe 8 entspricht, wodurch sich A und E gegenseitig so ausgleichen, dass die innere Getriebekontur 17 zentrisch drehen kann, während die äußere Getriebekontur 18 mit dem Rotor 9 exzentrisch umläuft. Es ist dadurch jederzeit sichergestellt, dass der Eingriff der Getriebekonturen 17 und 18 in jeder möglichen Stellung des Rotors 9 und der Förderschnecke 3 erhalten bleibt und die Drehmomentübertragung so ohne Unterbrechung immer möglich ist. Auch in dieser Ausführung werden die Bewegungen aller Teile des Verbindungsmittels 11 aus einer Rotation um deren Mittelachsen sowie einer dazu quer verlaufenden Translation gebildet. In jeder Phase der Pumpbewegung sind somit die im Wesentlichen längs zur Förderrichtung verlaufenden Mittelachsen aller Teile des Verbindungsmittels 11 immer koaxial zu der im Wesentlichen längs zur Förderrichtung verlaufenden Mittelachse des Rotors 9.

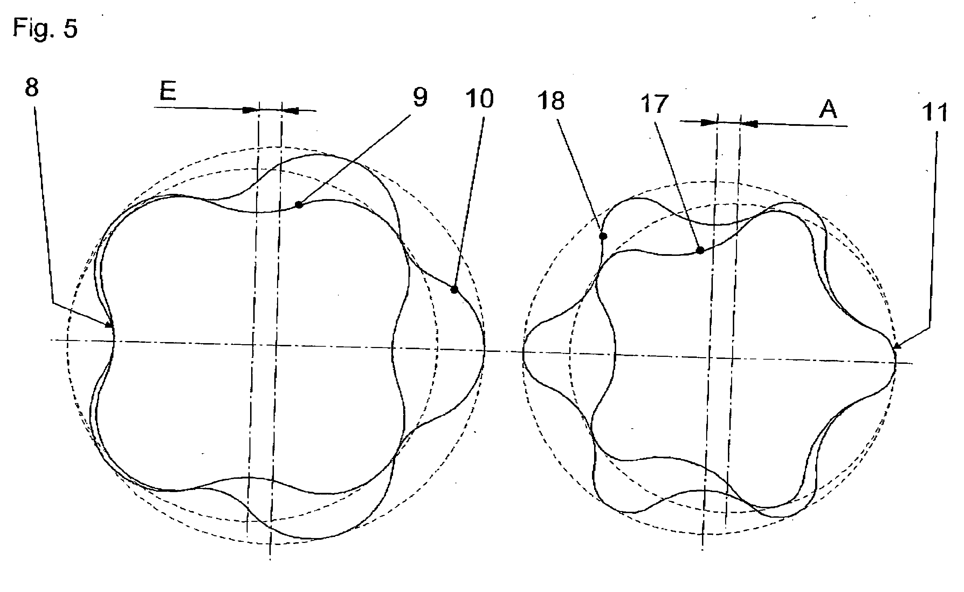

Die Fig. 5 zeigt mögliche Geometrien für den Rotor 9 und den Stator 10 der Exzenterschneckenpumpe 8 sowie für die innere und äußere Getriebekontur 17 und 18 des Verbindungsmittels 11, die jeweils die gleichen Werte für Achsabstand A und Exzentrizität E aufweisen. In der in Fig. 5 (linke Seite) dargestellten Ausführung kommt ein vierflügliger Rotor 9 zum Einsatz, der in einem fünfflügligen Stator 10 rotiert. Die auf der rechten Seite von Fig. 5 gezeigte Paarung von innerer Getriebekontur 17 und äußerer Getriebekontur 18 ist ebenfalls nach dem Moineauprinzip ausgeführt, mit einer fünfflügligen inneren Getriebekontur 17 und einer sechsflügligen äußeren Getriebekontur 18. Die Flügel der inneren Getriebekontur 17 und der äußeren Getriebekontur 18 können dabei gewendelt oder auch geradlinig ausgeführt sein.

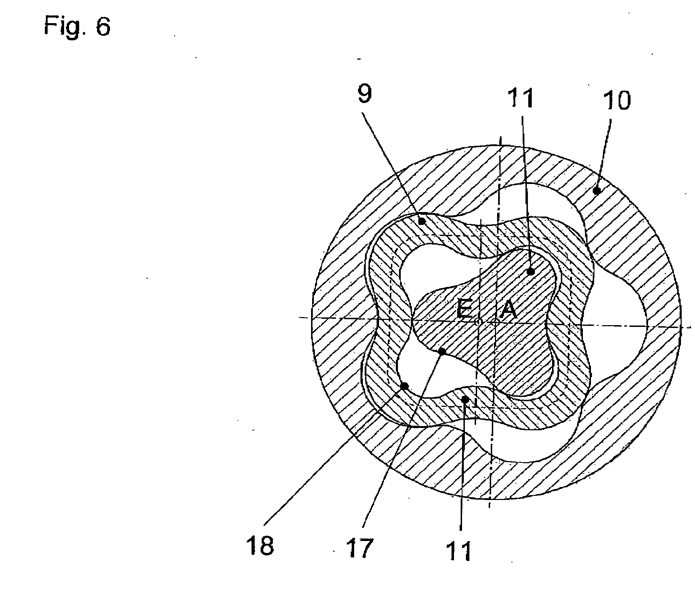

Besonders vorteilhaft erscheint es, wenn das Verbindungsmittel 11, welches aus den Getriebekonturen 17 und 18 gebildet ist, vollständig in den Rotor 9 integriert ist und die Getriebekonturen 17 und 18 ebenfalls eine förderfähige Geometrie (zum Beispiel eine Moineau-Geometrie) bilden, wie in Fig. 6 dargestellt ist. Die äußere Getriebekontur 18 ist dabei so verkleinert, dass sie einerseits vollständig innerhalb der Querschrtittsfläche des Rotors 9 liegt und dabei dieselbe Flügelanzahl wie der Rotor 9 hat, andererseits aber der Achsabstand A und die Exzentrizität E noch immer den selben Wert aufweisen. Zudem durchdringt die äußere Getriebekontur 18 den Rotor 9 in axialer Richtung vollständig auf seiner gesamten Länge L (ähnlich einer Durchgangsbohrung) in der von Moineaupumpen (Exzenterschneckenpumpen) bekannten gewendelten Art und Weise und mit derselben Wendelsteigung wie der Rotor 9, wobei die innere Getriebekontur 17 auf der nahezu vollen Lange der äußeren Getriebekontur 18 nach dem Moineauprinzip in diese eingreift. Die Getriebekonturen 17 und 18 erzeugen aufgrund der Moineau-Geometrie bei Drehung somit selbst einen Förderstrom, der sich innen durch den Rotor 9 hindurch bewegt, und der dann am austragseitigen Ende der Exzenterschneckenpumpe 8 aus dem Inneren des Rotors 9 austritt und sich dabei zum Förderstrom der Exzenterschneckenpumpe 8 addiert und deren Pumpleistung vergrößert.

Der Gegenstand der Erfindung ist als einfache und kompakte Einheit aus Einschneckenextruder 1 mit Exzenterschneckenpumpe 8 zugleich robust und zuverlässig. Die beschriebene Erfindung ermöglicht es eine Kunststoff-oder Kautschukmasse 7 mit gutem Wirkungsgrad, selbst gegen sehr hohen Extrusionswiderstand, materialschonend und volumenstromkonstant auszuformen.

Insbesondere im Vergleich zu den heute in der Extrusionstechnik eingesetzten Zahnradpumpen vermeidet die Erfindung deren mechanische Anfälligkeft sowie deren unbefriedigende Selbstreinigung und ermöglicht es, bei entsprechender Ausgestaltung, eine Verdrängerpumpe ohne zusätzlichen Antrieb 13 am Einschneckenextruder zu betreiben.

### Bezugszeichenliste

- 1: Einschneckenextruder
- 2: Extruderzylinder
- 3: Förderschnecke
- 4: Spritzkopf
- 5: Mittel zum Urformen
- 6: Profilstrang
- 7: Kunststoff- oder Kautschukmasse
- 8: Exzenterschneckenpumpe
- 9: Rotor (Exzenterschnecke)
- 10: Stator
- 11: Verbindungsmittel
- 12: Antrieb
- 13: zusätzlicher Antrieb
- 14: Querspritzkopf
- 15: Temperiereinrichtung
- 16: Verbindungsschieber
- 17: innere Getriebekontur
- 18: äußere Getriebekontur
- 19: zentrisch drehende Antriebsbewegung
- 20: Nut
- 21: Kreuzschieber
- 22: Kopplungsteil
- 23: Leiste
- 24: Keilwellenkontur
- A: Achsabstand der Getriebekonturen
- E: Exzentrizität der Exzenterschneckenpumpe
- L: Gesamtlänge des Rotors

## Patentansprüche

1. Extrusionsvorrichtung zur Herstellung eines strangförmigen Profils oder Schlauches, bestehend aus wenigstens einem Einschneckenextruder (1) mit Förderschnecke (3) und Antrieb (12), an dessen austragsseitigem Ende wenigstens eine Exzenterschneckenpumpe (8) mit Rotor (9) und Stator (10) angeschlossen ist und mit Kautschuk- oder Kunststoffmasse (7) beliefert wird, und wenigstens einem Spritzkopf (4), welcher Mittel zum Urformen (5) wenigstens eines Profilstrangs (6) im Extrusionsverfahren aufweist, wobei ein aus mindestens zwei Teilen bestehendes Verbindungsmittel (11) das Drehmoment einer zentrisch drehenden Antriebsbewegung (19) auf den Rotor (9) überträgt und diese dabei gleichzeitig von der exzentrischen Pumpbewegung des Rotors (9) entkoppelt, **dadurch gekennzeichnet, dass** die Teile (17, 18; 16, 22) des Verbindungsmittels (11) Mittelachsen besitzen, die im Wesentlichen längs zur Förderrichtung der Exzenterschneckenpumpe (8) und ständig koaxial zur der im Wesentlichen längs zur Förderrichtung ausgerichteten Mittelachse des Rotors (9) verlaufen, während der Rotor (9) seine exzentrische Pumpbewegung ausführt.

2. Extrusionsvorrichtung nach Anspruch 1, **dadurch gekennzeichnet, dass** das Verbindungsmittel (11) nach Art eines Kreuzschiebers (21) gestaltet und mit wenigstens zwei zueinander im Wesentlichen orthogonal ausgerichteten Nuten (20) ausgestattet ist, in denen ein Verbindungsschieber (16) gleitet.

3. Extrusionsvorrichtung nach Anspruch 1, **dadurch gekennzeichnet, dass** das Verbindungsmittel (11) durch zwei, zur Drehmomentübertragung im Eingriff befindliche, innere und äußere Getriebekonturen (17) und (18) gebildet ist, deren beiden Mittelachsen einen Achsabstand (A) aufweisen, der der Exzentrizität (E) der Exzenterschneckenpumpe (8) entspricht, und die innere Getriebekontur (17) zentrisch drehend angetrieben wird, während die äußere Getriebekontur (18) mit dem Rotor (9) verbunden ist und zusammen mit diesem dessen exzentrisch umlaufende Pumpbewegung ausführt.

4. Extrusionsvorrichtung nach Anspruch 3, **dadurch gekennzeichnet, dass** die innere und äußere Getriebekontur (17) und (18) auf einer Seite ihres Umfangs zum Zwecke der Drehmomentübertragung ineinandergreifen und sich gleichzeitig auf der radial gegenüberliegenden Seite tangential berühren.

5. Extrusionsvorrichtung nach Anspruch 4, **dadurch gekennzeichnet, dass** die Getriebekonturen (17) und (18) eine Moineau-Geometrie oder eine vergleichbare förderfähige Geometrie bilden.

6. Extrusionsvorrichtung nach Anspruch 4 oder 5, **dadurch gekennzeichnet, dass** die äußere Getriebekontur (18) vollständig innerhalb der Querschnittsfläche des Rotors (9) liegt, wobei die äußere Getriebekontur (18) den Rotor (9) in axialer Richtung vollständig auf seiner gesamten Länge (L) durchdringt, und die innere Getriebekontur (17) auf der nahezu vollen Länge der äußeren Getriebekontur (18) in diese eingreift und bei deren Drehung die Kautschuk- oder Kunststoffmasse (7) innen durch den Rotor (9) hindurch gefördert wird.

7. Extrusionsvorrichtung nach Anspruch 6, **dadurch gekennzeichnet, dass** die äußere Getriebekontur (18) dieselbe Flügelanzahl und dieselbe Wendelsteigung wie der Rotor (9) aufweist.

8. Extrusionsvorrichtung nach Anspruch 1 bis 7, **dadurch gekennzeichnet, dass** die im Wesentlichen längs zur Förderrichtung verlaufenden Mittelachsen von Förderschnecke (3) und Rotor (9) zueinander koaxial sind, und der Rotor (9) mit der Förderschnecke (3) wirkverbunden ist, und die Förderschnecke (3) und der Rotor (9) gemeinsam vom selben Antrieb (12) angetrieben werden.

9. Extrusionsvorrichtung nach Anspruch 1 bis 7, **dadurch gekennzeichnet, dass** die im Wesentlichen längs zur Förderrichtung verlaufenden Mittelachsen von Förderschnecke (3) und Rotor (9) zueinander nicht koaxial sind, und der Rotor (9) mit der Förderschnecke (3) nicht wirkverbunden ist, und die Förderschnecke (3) von einem Antrieb (12) und der Rotor (9) von einem zusätzlichen Antrieb (13) jeweils getrennt von einander angetrieben werden.

10. Extrusionsvorrichtung nach Anspruch 9, **dadurch gekennzeichnet, dass** die Drehzahl des Rotors (9) entweder regelmäßig periodisch oder mittels einer Druck-Drehzahl-Regelung variiert wird.

11. Extrusionsvorrichtung nach einem der vorhergehenden Ansprüche, **dadurch gekennzeichnet, dass** die Drehzahl der Förderschnecke (3) entweder regelmäßig periodisch oder mittels einer Druck-Drehzahl-Regelung variiert wird.

12. Extrusionsvorrichtung nach einem der vorhergehenden Ansprüche, **dadurch gekennzeichnet, dass** zumindest ein Bestandteil der Exzenterschneckenpumpe (8), welcher im Betrieb mit dem Fördermedium in Kontakt befindlich ist, an eine Temperiereinrichtung (15) angeschlossen ist, welche mittels geeigneter Maßnahme, Wärmeenergie zu- oder abführen kann.
